# EUROPÄISCHE PATENTSCHRIFT

(11) **EP 1 654 532 B1**
(45) Veröffentlichungstag und Bekanntmachung des Hinweises auf die Patenterteilung: **05.11.2008**
(21) Anmeldenummer: 04763794.7
(22) Anmeldetag: 04.08.2004
(51) Int. Cl.: G01N 21/898, D06H 3/08

(54) **TUFTING-MASCHINE MIT EINER VORRICHTUNG ZUM ERFASSEN VON FEHLERSTELLEN IN TUFTING-WARE UND VERFAHREN HIERFÜR**
TUFTING MACHINE WITH A DEVICE FOR THE DETECTION OF FAULTS IN TUFTED PRODUCTS AND ASSOCIATED METHOD
MACHINE À TUFTER AVEC UN DISPOSITIF POUR DETECTER DES FAUTS DANS UN TISSU TUFTÉ ET PROCÉDÉ RELATIF

(30) Priorität: 11.08.2003 DE 10336748
(43) Veröffentlichungstag der Anmeldung: 10.05.2006
(73) Patentinhaber: PROTECHNA Herbst GmbH & Co. KG, 85521 Ottobrunn (DE)
(72) Erfinder: FERCHAU, Alfred, 60389 Frankfurt (DE); RAUSCH, Christian, 82008 Unterhaching (DE); GREINER-MAI, Klaus, 82178 Puchheim (DE); BONGRATZ, Rainer, 83620 Feldkirchen-Westerham (DE)
(74) Vertreter: Thum, Bernhard
(86) Internationale Anmeldenummer: PCT/EP2004/008745
(87) Internationale Veröffentlichungsnummer: WO 2005/017509

(56) Entgegenhaltungen:
- DE-A- 2 920 050
- DE-A- 4 131 365
- US-A- 4 619 527
- US-A1- 2002 146 153
- US-B1- 6 226 088
- ANONYMOUS: "Fault-free carpets a boost for European carpet industry" INTERNET ARTICLE, [Online] 14. Juni 2003 (2003-06-14), XP002306954 europa.eu.int Gefunden im Internet: <URL:http://europa.eu.int/comm/research/gr owth/gcc/projects/profiles/cr122991-bre208 86.html> [gefunden am 2004-11-22] & INTERNET ARTICLE, [Online] Web.archive.org Gefunden im Internet: <URL:http://web.archive.org/web/*/http://e uropa.eu.int/comm/research/growth/gcc/proj ects/profiles/cr122991-bre20886.html> [gefunden am 2004-11-22]

## Beschreibung

Die vorliegende Erfindung betrifft eine Tufting-Maschine mit einer Vorrichtung zum Erfassen von Fehlerstellen in Tufting-Ware mit einer Lichtquelle zum Einstrahlen von Licht auf die Tufting-Ware und mit einer optischen Erfassungseinrichtung zum Erfassen des von der Tufting-Ware ausgehenden Lichts.

Tufting ist eines der gängigen Produktionsverfahren zur Herstellung von Teppich. Dabei stechen vertikal bewegte, an einer Nadelbarre angeordnete Nadeln einen Polmaterial-Faden von oben in ein zugeführtes flächiges Trägermaterial, vorzugsweise ein gewebtes Trägermaterial oder ein vliesartiges Trägermaterial. Beim Zurückziehen der Nadeln bildet sich an jeder Nadel auf der Vorderseite der Tufting-Ware eine Schlinge, die von einem Greifer, auch "Looper" genannt, festgehalten wird. Die Nadeln sind üblicherweise im Abstand weniger Millimeter auf der sich über mehrere Meter erstreckenden Nadelbarre befestigt und werden gemeinsam bewegt. Wird der Teppich als Velours produziert, was heutzutage etwa 70 - 80 % der Produktion ausmacht, so werden die Polmaterial-Schlingen mittels wenigstens eines zyklisch bewegten Messers aufgeschnitten, solange sie sich noch auf den Greifern befinden.

Da die zum Aufschneiden der Polmaterial-Schlingen verwendeten Messer einem natürlichen Verschleiß unterliegen und im Betrieb verbogen, dejustiert oder stumpf werden können, kommt es bei der Herstellung von Tufting-Ware oftmals zu dem Problem, dass die Polmaterial-Schlingen, die sich auf den Greifern befinden, von den Messern nicht oder nicht vollständig aufgeschnitten werden. Dies führt dazu, dass zunächst auf die Tufting-Ware im Bereich der auf den Greifern aufgefädelten Polmaterial-Schlingen mechanische Zugkräfte ausgeübt werden, die bedingt durch eine Vorlaufbewegung der Tufting-Ware anwachsen. Schließlich kann es zu Fehlerstellen in der Tufting-Ware in Folge eines unkontrollierten Abreißens einzelner Filamente oder eines gesamten Polmaterial-Fadens im Bereich der Polmaterial-Schlingen oder auch in Folge eines Einreißens des Trägermaterials kommen. Derartige Fehlerstellen werden je nach Stärke als "Schnittstreifen", "Reißer" oder "Rupfer" bezeichnet. Sie sind schwer zu erkennen, insbesondere dann, wenn die Polmaterial-Schlingen von den Messern fast vollständig aufgeschnitten werden und lediglich einige Filamente des Polmaterials unkontrolliert abreißen. Gerade derartige Fehlerstellen sind mit herkömmlichen Überwachungsverfahren und Überwachungsvorrichtungen nur sehr schwer und verhältnismäßig spät erfassbar.

Aus der US 5,550,384 ist eine Vorrichtung und ein Verfahren bekannt, bei welchem die Tufting-Ware einseitig durch die Lichtquelle bestrahlt wird und mittels der optischen Erfassungseinrichtung auf der entgegengesetzten Seite der Tufting-Ware das hindurchtretende Licht erfasst wird. Diese Vorrichtung hat den Nachteil, dass ihre Komponenten auf beiden Seiten der Tufting-Ware angebracht werden müssen, was den Aufbau einer entsprechend ausgerüsteten Tufting-Maschine kompliziert macht. Darüber hinaus lassen sich auch mit dieser Vorrichtung die vorstehend angesprochenen Fehlerstellen, die durch unkontrolliertes Abreißen von Polmaterial-Fäden oder einzelner Filamente davon entstehen, nicht mit hinreichender Zuverlässigkeit ermitteln.

Aus dem Dokument US 2002/0146153 A1 ist ein Verfahren zur Oberflächenüberwachung textiler Produkte bekannt. Dabei wird mittels einer optischen Überwachungseinrichtung eine bereits fertiggestellte textile Flächenware mittel zwei paralleler Lichtbündel überwacht, mit denen das textile Flächengebilde angestrahlt wird, wobei in der Folge über geeignete Kameras Fehlerstellen erfasst werden.

Der Artikel "Fault-free carpets a boost for European carpet industry", veröffentlicht am 14. Juni 2003 unter der URL:http://europa.eu.int/comm/research/growth/gcc/projects/profiles/cr122991-bre20886.html beschreibt die allgemeine Möglichkeit der Überwachung von Teppichen bei der Herstellung, wobei eine Kamera den Bereich nahe einer bei der Teppichherstellung eingesetzten Nadel auf Löcher, Garnfehler, gebrochene Fasern oder andere Fehler überwacht.

Das Dokument US 6 226,088 B1 betrifft die Herstellung Webware, wobei die Webware über ein optisches Fehlererfassungssystem überwacht wird.

Das Dokument DE 2920050 A1 offenbart eine Vorrichtung und ein Verfahren zur Erkennung von Fehlern während der Herstellung von Tuftingware, wobei die Rückseite der Tuftingware optisch abgetastet wird und das reflektierte Licht erfasst wird. Die Abtastung erfolgt nah der Erzeugugsstelle der Tuftingware.

Es ist eine Aufgabe der vorliegenden Erfindung, eine Tufting-Maschine mit einer Vorrichtung und ein entsprechendes Verfahren bereitzustellen, welche eine zuverlässige Erfassung von Fehlerstellen in Tufting-Ware unter verhältnismäßig geringem konstruktivem Aufwand zu einem frühen Zeitpunkt bei oder unmittelbar nach deren Entstehung ermöglichen.

Diese Aufgabe wird durch eine Tufting-Maschine mit einer Vorrichtung zum Erfassen von Fehlerstellen in Tufting-Ware gemäß dem Anspruch 1 gelöst

Die erfindungsgemäße Tufting-Maschine ermöglicht es, dass Unebenheiten, die beim Aufschneiden der von dem Greifer gehaltenen Polmaterial-Schlingen auftreten, insbesondere aufgrund eines stumpfen, dejustierten oder verbogenen Messers, unmittelbar bei deren Entstehung erfasst werden. Dies geschieht dadurch, dass die erfindungsgemäße Vorrichtung Unebenheiten der Tufting-Ware erfasst, welche aus mechanischen (Zug-) Spannungen resultieren, die sich dann aufbauen, wenn kein vollständiges Aufschneiden der Polmaterial-Schlingen durch die dafür vorgesehenen Messer erfolgt. Die lokalen Unebenheiten, insbesondere Vertiefungen bzw. "Dellen", sind in der Bewegung der Tufting-Ware auf deren Rückseite solange vorhanden, bis die nicht vollständig aufgeschnittenen Polmaterial-Schlingen unter der mechanischen (Zug-) Spannung unkontrolliert abreißen. Nach dem Abreißen bewegt sich die Tufting-Ware wieder in ihre Ausgangsform zurück, wobei die Unebenheiten (Vertiefungen, "Dellen") im Bereich der abgerissenen Polmaterial-Schlingen verschwinden. Mit anderen Worten sind die Unebenheiten ("Dellen") in der durchlaufenden Tufting-Ware bezüglich der Tufting-Maschine ortsfest und bilden sich in einem baulich schwer zugänglichen Bereich einige Stiche hinter den Nadeln aus.

An der fertigen Tufting-Ware können durch nicht ordnungsgemäß funktionierende Messer hervorgerufene Fehlerstellen allenfalls noch durch Begutachtung der Vorderseite der Tufting-Ware zuverlässig erfasst werden, was in der Regel aufwändig ist und erst zu einem späteren Zeitpunkt nach der Produktion erfolgen kann. In der Folge ist es dann aber problematisch, anhand der erfassten Fehlerstellen genau diejenigen Messer der Tufting-Maschine zu identifizieren und dann zu warten oder auszuwechseln, die für die Verursachung der Fehlerstellen verantwortlich sind. Auch in dieser Hinsicht weist die vorliegende Erfindung Vorteile gegenüber dem Stand der Technik auf, da die Fehlerstellen erfindungsgemäß bereits während der Entstehung erfasst werden, so dass Wartungspersonal sofort das fehlerhaft arbeitende Messer erkennen und warten oder ersetzen kann.

Eine Weiterbildung der Erfindung sieht vor, dass das von der Lichtquelle ausgehende Licht, vorzugsweise durch ein optisches System, insbesondere durch ein Linsensystem, parallel gerichtet ist. Durch die Verwendung von parallel gerichtetem Licht anstelle von diffusem Licht, lassen sich Intensitätsunterschiede aufgrund von Unebenheiten auf der Rückseite der Tufting-Ware kontrastreicher darstellen. So ist es möglich, durch auf die Rückseite der Tufting-Ware schräg einfallendes, parallel gerichtetes Licht bestimmte Bereiche von Unebenheiten stärker hervorzuheben, da diese unter größerem Einfallwinkel bestrahlt werden, und andere Bereiche dunkler erscheinen zu lassen, da diese mit einem sehr kleinen Einfallwinkel bestrahlt werden oder gar im Schatten liegen.

Grundsätzlich kann unter dem Begriff "Licht" jegliche elektromagnetische Strahlung verstanden werden. So ist es möglich, Licht im sichtbaren Bereich zu verwenden. Vorzugsweise sieht die Erfindung jedoch in einer Weiterbildung vor, dass das Licht im Infrarot-Bereich liegt, insbesondere mit einer Wellenlänge von 10⁻³m bis 7,8·10⁻⁷m.

Dadurch lassen sich Farbunterschiede von Polmaterial und Trägermaterial der Tufting-Ware und andere Einflüsse von einfallendem sichtbarem Störlicht nivellieren.

In diesem Zusammenhang sieht eine Weiterbildung der Erfindung vor, dass die Lichtquelle eine Vielzahl von Infrarot-Leuchtdioden aufweist. Derartige Infrarot-Leuchtdioden sind kostengünstig verfügbar und ermöglichen durch Anordnung auf einer Linie und gleichgerichteter Orientierung eine hinreichend gute Bestrahlung breiter Bahnen aus Tufting-Ware mit konstanter Intensität.

Grundsätzlich kann die Strahlungsrichtung des einfallenden Lichtes gegenüber der Tufting-Ware beliebig gewählt werden. In einer Weiterbildung der Erfindung ist jedoch vorgesehen, dass die Tufting-Ware sich während Erfassung der Fehlerstellen in einer Förderrichtung bewegt und dass die Bestrahlungsrichtung des einfallenden Lichts im Wesentlichen quer zur Förderrichtung verläuft. Bei dieser Art der Bestrahlung ergeben sich besonders signifikante Intensitätsunterschiede quer zur Förderrichtung, die eine weiter vereinfachte Erfassung von Fehlerstellen ermöglichen, wie nachfolgend noch erläutert wird.

Ferner kann hinsichtlich der Bestrahlung vorgesehen sein, dass das von der Lichtquelle ausgehende Licht mit der Rückseite der Tufting-Ware einen spitzen Winkel, vorzugsweise im Bereich von 10° bis 80°, insbesondere im Bereich von 30° bis 60°, einschließt. Derartige Winkelbereiche sorgen für deutliche Intensitätsunterschiede und einen guten Kontrast im Bereich von durch die vorstehend angesprochenen Vorgänge entstehenden Unebenheiten auf der Rückseite der Tufting-Ware.

Als optische Erfassungseinrichtung kann eine einfache Anordnung mehrerer lichtempfindlicher Dioden eingesetzt werden. Eine vorteilhafte Weiterbildung der Erfindung sieht vor, dass die Erfassungseinrichtung eine Kamera, insbesondere eine Zeilenkamera, aufweist. Vorzugsweise tastet die Zeilenkamera die Rückseite der Tufting-Ware quer zu deren Förderrichtung ab, was insbesondere bei Einstrahlung von parallel gerichtetem Licht mit Strahlungsrichtung quer zur Bewegungsrichtung des Teppichs aufgrund der sich einstellenden Intensitätsunterschiede und Kontraste Vorteile bei der Erfassung von Fehlerstellen liefert.

Neben der Verwendung einer kostengünstig verfügbaren und verhältnismäßig einfach ansteuerbaren sowie signalmäßig einfach auswertbaren Zeilenkamera kann jedoch auch eine Flächenkamera eingesetzt werden. Als Kamera sind CMOS- oder CCD-Kameras einsetzbar.

Eine Ausführungsform der Erfindung sieht vor, dass die Erfassungseinrichtung ein elektronisches Signalfilter, insbesondere ein Digitalfilter, umfasst. Dabei kann das Filter als FIR-Filter ("Finite Impulse Response"-Filter), insbesondere als FIR-Bandpassfilter, ausgebildet sein. Eine Weiterbildung der Erfindung sieht in diesem Zusammenhang ferner vor, dass das Filter zur Unterdrückung von in der Regel periodisch auftretenden, regulären Helligkeitsssignalen ausgebildet ist, die von der Struktur eines Trägermaterials der Tufting-Ware, der Lage von Noppen auf der Rückseite der Tufting-Ware oder dergleichen herrühren. Mit anderen Worten wird das Bildsignal, das die Helligkeitsverteilung entlang der Nadelbarre der Tufting-Maschine repräsentiert, derart aufbereitet, dass es das reguläre Helligkeitssignal unterdrückt, das die Noppen und die Struktur des Trägermaterials verursachen. Dagegen wird die charakteristische Lichtverteilung der Fehlerstelle, insbesondere des Rupfers, vom Filter gegenüber den vorstehend angesprochenen Störsignalen hervorgehoben.

Eine Weiterbildung dieser Ausführungsform sieht darüber hinaus weiter vor, dass wenigstens ein weiteres Filter zum Erkennen von anderweitig verursachten Fehlerstellen, wie beispielsweise Fadenbruch- oder/und Doppelfaden-Fehlerstellen vorgesehen sind. Dadurch wird es möglich, die Empfindlichkeit der Erkennung von Rupfern über die Filterparameter und den jeweiligen Filtern zugeordnete Erkennungsschwelle separat zu steuern und das Auftreten von Rupfern von anderen Fehlertypen, wie beispielsweise Fadenbruch-Fehlerstellen oder Doppelfaden-Fehlerstellen deutlich zu unterscheiden. In diesem Fall könnte der jeweilige Filter auch die charakteristischen Signale der jeweils anderen Fehlertypen schwächen.

Grundsätzlich ist es möglich, Lichtquelle und Erfassungseinrichtung kontinuierlich zu betreiben. In einer vorteilhaften Weiterbildung der Erfindung ist hingegen vorgesehen, dass die Lichtquelle oder/und die Erfassungseinrichtung zu dem Arbeitstakt einer Nadelbarre zum Einnadeln des Polmaterials in ein Trägermaterial der Tufting-Ware synchronisiert sind. Dabei kann vorgesehen sein, dass die Lichtquelle und die Erfassungseinrichtung wenigstens einen, beispielsweise drei, Erfassungszyklen je Arbeitstakt durchlaufen und zeitlich auftretende Einschränkungen eines Sichtfeldes der Erfassungseinrichtung zeitlich ausblenden. Dadurch kann erreicht werden, dass nur dann eine Erfassung erfolgt, wenn das Sichtfeld der Erfassungseinrichtung nicht durch bewegte Teile der Tufting-Maschine eingeschränkt ist.

Die Erfindung betrifft ferner ein Verfahren zur Überwachung der Herstellung von Tufting-Ware und zum Erfassen von Fehlerstellen, umfassend die Schritte: Einstrahlen von Licht auf die Tufting-Ware und Erfassen des von der Tufting-Ware ausgehenden Lichts. Erfindungsgemäß ist bei diesem Verfahren ferner vorgesehen, dass die Rückseite der Tufting-Ware in einem Bestrahlungsbereich schräg mit Licht bestrahlt wird, wobei in dem Bestrahlungsbereich wenigstens ein Greifer zum Festhalten von Polmaterial-Schlingen und wenigstens ein Messer zum Aufschneiden der Polmaterial-Schlingen an der Vorderseite der Tufting-Ware angreifen, und dass Intensitäten des von der Rückseite der Tufting-Ware innerhalb des Bestrahlungsbereichs reflektierten Lichts erfasst und anhand der erfassten Lichtintensitäten durch Fehlerstellen bedingte Unebenheiten der Rückseite der Tufting-Ware ermittelt werden.

In einer Weiterbildung des erfindungsgemäßen Verfahrens wird das von der Lichtquelle ausgehende Licht parallel gerichtet. Ferner kann bei dem erfindungsgemäßen Verfahren das von der Lichtquelle ausgehende Licht mit der Rückseite der Tufting-Ware einen spitzen Winkel, vorzugsweise im Bereich von 10° - 80°, insbesondere im Bereich von 30° - 60°, einschließen.

Wie bereits im Hinblick auf die erfindungsgemäße Tufting-Maschine erläutert, kann auch bei dem erfindungsgemäßen Verfahren vorgesehen sein, dass die Lichtquelle und die Erfassungseinrichtung zu dem Arbeitstakt einer Nadelbarre zum Einnadeln des Polmaterials in ein Trägermaterial der Tufting-Ware synchronisiert wird. Ferner kann vorgesehen sein, dass die Lichtquelle und die Erfassungseinrichtung wenigstens einen, beispielsweise drei, Erfassungszyklen je Arbeitstakt durchlaufen. So ist, es beispielsweise denkbar, dass die Nadelbarre sich während der Herstellung von Tufting-Ware zyklisch zwischen einer oberen Totpunkt-Stellung und einer unteren Totpunkt-Stellung hin- und herbewegt, wobei sie sich im Bereich der oberen Totpunkt-Stellung etwa 30 ms aufhält. Innerhalb dieser 30 ms können dann beispielsweise drei Erfassungszyklen erfolgen, d.h. es können drei Aufnahmen mit der Erfassungseinrichtung vorgenommen werden, wobei jede Aufnahme etwa 10 ms benötigt.

Die Erfindung wird im Folgenden anhand der beiliegenden Figuren beispielhaft erläutert. Es stellen dar:
- Fig. 1: eine schematische Darstellung der Situation bei der Entstehung einer Fehlerstelle in einer Tufting-Ware aufgrund eines nicht ordnungsgemäß funktionierenden Messers;
- Fig. 2: eine schematische Darstellung zur Erläuterung des Zusammenspiels zwischen der Bestrahlung der Tufting-Ware durch die Lichtquelle und der Erfassung in dem Bestrahlungsbereich mittels der Erfassungsein- richtung;
- Fig.3: eine schematische Darstellung einer erfindungsgemäßen Tufting- Maschine in einer Betriebsphase, in der sich die Nadelbarre im Bereich ihrer oberen Totpunkt-Stellung befindet;
- Fig. 4: eine schematische Darstellung der Tufting-Maschine gemäß Fig. 3 in einer Stellung, in welcher sich die Nadelbarre in ihrer unteren Totpunkt- Stellung befindet
- Fig. 5: eine Ansicht entsprechend der Schnittlinie V-V aus Fig. 3 und
- Fig. 6: eine schematische Darstellung eines Erfassungssignallaufs über dem Ort ent- lang der Sichtlinie der Erfassungseinrichtung parallel zur Nadelbarre.

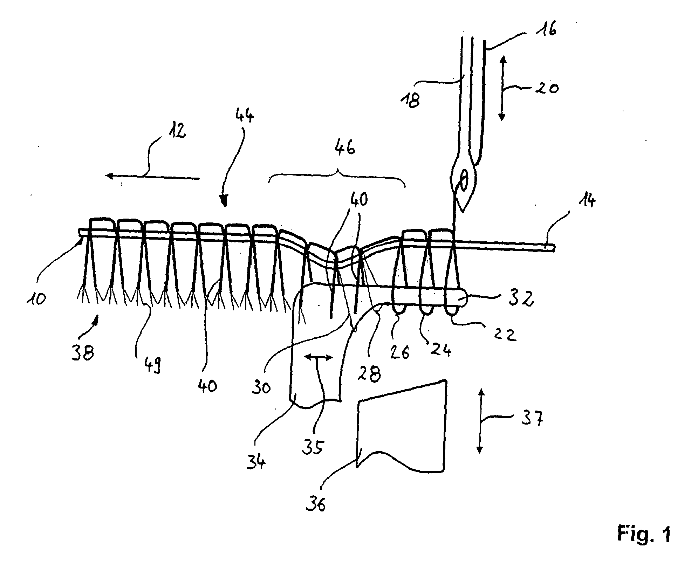

In Fig. 1 ist die Situation der Entstehung von Fehlerstellen bei der Herstellung von Tufting-Ware schematisch in der Seitenansicht dargestellt. Eine Tufting-Waren-Rahn 10 bewegt sich entsprechend Pfeil 12 in Fig. 1 in einer Förderrichtung nach links, beispielsweise mit einer Geschwindigkeit von 3 m/min. Die Tufting-Ware 10 setzt sich zusammen aus einem Trägermaterial 14 und einem Polmaterial 16, das fadenförmig zugeführt wird. Das Polmaterial 16 wird über eine Vielzahl von Nadeln 18, die an einer in Fig. 1 nicht gezeigten Nadelbarre fixiert sind, in das Trägermaterial 14 eingebracht, man spricht auch von "Einnadeln". Dies erfolgt dadurch, dass die Nadeln 18 zyklisch entsprechend Pfeil 20 nach oben und nach unten bewegt werden und bei ihrer Bewegung nach unten das Trägermaterial 14 durchdringen, wobei sie den Polmaterial-Faden 16 mitnehmen. Bei ihrer zyklischen Bewegung nach oben und nach unten bilden sich auf der Funktionsseite 38 (auch "Vorderseite" genannt) der Tufting-Ware 10 Polmaterial-Schleifen 22, 24, 26, 28, 30, die von einem fingerartigen Fortsatz 32 eines metallischen Greifers 34 festgehalten werden. Der metallische Greifer 34 bewegt sich ebenfalls gemäß Pfeil 35 zyklisch parallel zu der Tufting-Ware 10 in Fig. 1 nach links oder nach rechts.

Bei der Herstellung von Velours-Tufting-Ware sind die einzelnen Polmaterial-Schleifen mit einem Messer 36 aufzuschneiden. Das Messer 36 bewegt sich dabei gemäß Pfeil 37 zyklisch nach oben und nach unten, d.h. im Wesentlichen orthogonal zu der Bewegungsrichtung 12 der Tufting-Ware 10, um die von dem Greifer 34 aufgenommenen und festgehaltenen Polmaterial-Schleifen 22 bis 30 zu durchtrennen. Nach einem vollständigen Durchtrennen der Polmaterial-Schleifen ergibt sich auf der Funktionsseite 38 der Tufting-Ware eine Vielzahl von Fäden 40. Die Fäden 40 sind über obenliegende Schlaufen, die im Folgenden aufgrund ihrer Festigkeit Noppen 42 genannt werden, auf der Rückseite 44 jeweils paarweise miteinander verbunden. Die Fäden 40 weisen auf der Funktionsseite 38 bei ordnungsgemäß funktionierendem Messer 36 ein klar definiertes Schnittende auf, wobei alle Filamente der Fäden gleich weit von dem Trägermaterial 14 auf der Funktionsseite 38 vorstehen.

Fig. 1 zeigt jedoch einen Zustand, bei welchem das Messer 36 nicht mehr ordnungsgemäß funktioniert. Der Zustand tritt beispielsweise dann auf, wenn das Messer 36 stumpf, dejustiert oder verbogen ist. In diesem Zustand werden die einzelnen Polmaterial-Schleifen 22 bis 30 nicht mehr vollständig von dem Messer 36 aufgeschnitten und sie verharren - gehalten von den einzelnen nicht durchtrennten Filamenten - unerwünscht lange auf dem Greifer 34 aufgefädelt. Aufgrund der durch den Pfeil 12 dargestellten Bewegung der Tufting-Ware in Fig. 1 nach links, die sich aus der Herstellung der Tufting-Ware 10 als kontinuierliches Bandmaterial ergibt, kommt es wegen der unzureichenden Durchtrennung der Polmaterial-Schleifen 22 - 30 zu einem Spannungszustand und einer Deformation der Tufting-Ware 10 im Bereich 46. Dies liegt daran, dass die Polmaterial-Schleifen 28 und 30 aufgrund der unzureichenden Durchtrennung durch das Messer 36 noch mit den einzelnen nicht durchtrennten Filamenten auf dem Greifer 34 gehalten werden. Die Förderbewegung der Tufting-Ware 10 gemäß Pfeil 12 führt jedoch dazu, dass die einzelnen Polmaterial-Schleifen 28 und 30, insbesondere die Schleife 30, stark gespannt werden, bis sie schließlich filamentweise aufbrechen. Dieses Aufbrechen erfolgt jedoch nicht annähernd so gleichmäßig wie durch einen definierten Schnitt mittels eines ordnungsgemäß funktionierenden Messers 36. Vielmehr erfolgt dieses Aufbrechen unkontrolliert, so dass einzelne Filamente verschiedener Länge vorstehen oder das Trägermaterial 14 einreißt. Jedenfalls ergibt sich aufgrund unzureichend schneidender Messer 36 eine Tufting-Ware 10, bei der die einzelnen Fäden 40 unregelmäßig vorstehende Filamente 49 oder einzelne Einrissstellen in dem Trägermaterial 14 aufweisen. Derartige sich aus der Situation gemäß Fig. 1 ergebende Fehlerstellen werden im Fachjargon auch als "Schnittstreifen", "Reißer" oder "Rupfer" bezeichnet. Das Problem derartiger Fehlerstellen liegt insbesondere darin, dass sie die Qualität der Funktionsseite 38 der Tufting-Ware hinsichtlich ihres optischen Erscheinungsbildes beeinträchtigen und bislang erst relativ spät bei Begutachtung der Funktionsseite 38 der Tufting-Ware erkennbar sind.

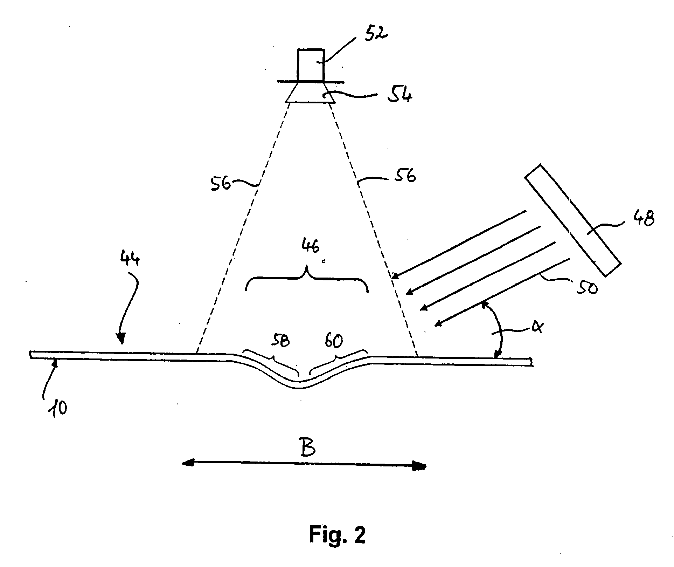

Fig. 2 zeigt nun das Grundprinzip der Erfindung, die an diesem Punkt ansetzt. Wiederum ist die Tufting-Ware 10 gezeigt. Zur Vereinfachung der Darstellung sind die einzelnen Polmaterial-Fäden nicht dargestellt. Es sei jedoch darauf hingewiesen, dass der Bereich 46 in Fig. 2 aufgrund der in Fig. 1 gezeigten und mit Bezug darauf geschilderten Vorgänge momentan deformiert ist, d.h. aufgrund der unzureichenden Durchtrennung der Polmaterial-Schleifen 28 und 30, die sich in dem in Fig. 2 gezeigten Zustand im Bereich 46 noch auf dem Greifer 34 aufgefädelt befinden.

Fig. 2 zeigt ferner eine Lichtquelle 48 aus der parallel gerichtetes Infrarotlicht 50 in einem Winkel α von etwa 30° schräg auf die Tufting-Ware 10 eingestrahlt wird. Die Bestrahlung erfolgt in einem Bestrahlungsbereich B. Der Bestrahlungsbereich B wird zumindest teilweise mittels einer Kamera 52 überwacht. Die Kamera 52 weist ein Objektiv 54 auf. Der Erfassungsbereich der Kamera 52 ist durch die strichlierten Linien 56 gekennzeichnet. Die Gleichrichtung der Infrarot-Lichtstrahlen 50 erfolgt mittels eines nicht gezeigten optischen Linsensystems.

Unter der Bestrahlung mit dem Infrarotlicht 50 kommt es im Verformungsbereich 46 zu stärker bestrahlten Flächenabschnitten 58 und weniger stark bestrahlten Flächenabschnitten 60. Man stelle sich den Verformungsbereich 46 wie einen trichterförmigen Krater vor. Aufgrund des deutlich kleineren Einfallswinkels des Lichts 50 im Flächenabschnitt 60 gegenüber dem deutlich größeren Einfallwinkel des Lichts 50 im Flächenabschnitt 58 kommt es im Flächenabschnitt 58 zu sehr starken Reflexionen, wohingegen es im Flächenabschnitt 60 zu allenfalls geringen Reflexionen kommt. Im Extremfall trifft das Infrarotlicht 50 im Flächenabschnitt 58 zumindest teilweise senkrecht auf die Tufting-Ware, wohingegen Teile des Flächenabschnitt 60 vollständig im Schatten liegen. Die Intensitätsunterschiede des von dem Flächenbereich 58 und 60 reflektierten Lichts können von der Kamera 52 erfasst und mit einer nicht gezeigten Auswerteelektronik ausgewertet werden. Die Auswertung ist erheblich einfacher und zuverlässiger als bei Systemen, bei welchen die Rückseite 44 der Tufting-Ware mit diffusem Licht im Wesentlichen orthogonal von oben ausgeleuchtet wird.

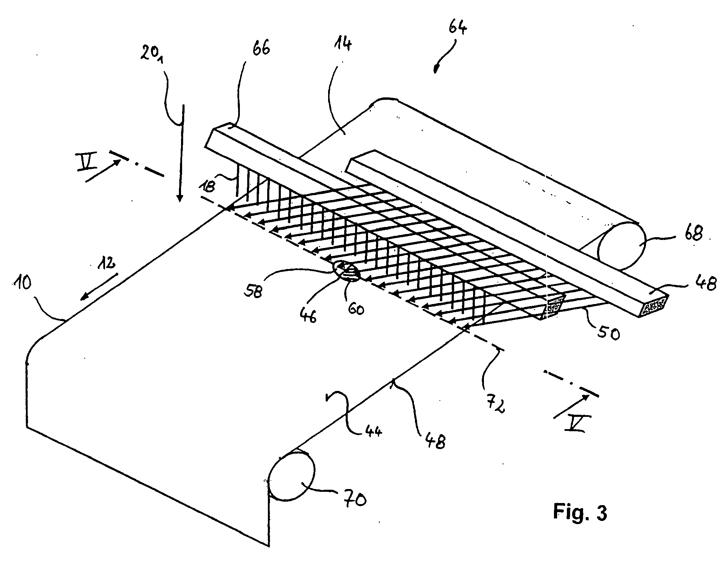

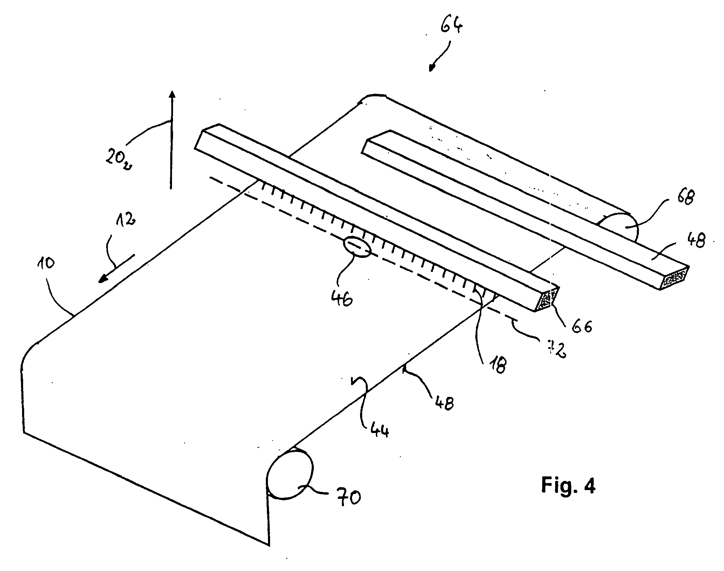

Fig. 3 und 4 zeigen schematisch eine Tufting-Maschine 64, bei welcher die Erfindung zum Einsatz kommt, um die Herstellung von Tufting-Ware 10 zu überwachen. Dabei wird das Trägermaterial 14 von einer Vorratsrolle 68 abgerollt. Es wird unter einer Nadelbarre 66 hindurchgeführt, an der eine Vielzahl von Nadeln 18 befestigt sind. Typischerweise beträgt die Breite einer Nadelbarre mehrere Meter, beispielsweise 4 bis 5 m, wobei die einzelnen Nadeln 18 im Abstand weniger Millimeter daran befestigt sind. Die Nadelbarre 66 wird entsprechend Pfeil 20₁ aus der in Fig. 3 gezeigten oberen Totpunkt-Stellung nach unten bewegt, wobei die einzelnen Nadeln 18 das Trägermaterial 14 durchdringen und dabei Polmaterial-Fäden durch das Trägermaterial hindurchführen, wie mit Bezug auf Fig. 1 repräsentativ für lediglich eine Nadel 18 erläutert. Hinter der Reihe von Nadeln 18 liegt in Materialflussrichtung 12 bereits fertige Tufting-Ware 10 vor. Wie mit Bezug auf Fig. 1 erläutert, erfolgt unterhalb der Nadelreihe auf der Funktionsseite 38 der Tufting-Ware 10 der Schnittvorgang zum Aufschneiden der einzelnen Polmaterial-Schleifen mittels der in Fig. 3 nicht dargestellten Greifer 34 und Messer 36. Die Tufting-Ware 10 wird sodann über eine weitere Förderrolle 70 weitergefördert.

Fig. 3 und 4 zeigen ferner eine Kamerasichtlinie 72 einer dort nicht gezeigten Zeilenkamera, die die Rückseite 44 der Tufting-Ware überwacht. Ferner zeigen Fig. 3 und 4 einen mit einer Ellipse schematisch wiedergegebenen Verformungsbereich 46 in Form eines trichterförmigen Kraters, der sich entsprechend der Darstellung gemäß Fig. 1 momentan an der gezeigten Stelle ausbildet.

In der in Fig. 4 gezeigten unteren Totpunkt-Stellung der Nadelbarre 66 erfolgt keinerlei Erfassung von Fehlerstellen, da die Nadelbarre die Rückseite 44 der Tufting-Ware 10 teilweise abdeckt und somit keine zuverlässige Erfassung von Fehlerstellen zulässt. Die Nadelbarre 66 bewegt sich jedoch zyklisch entsprechend der Pfeile 20₁ und 20₂ nach oben und nach unten und erreicht ausgehend von der Darstellung gemäß Fig. 4 die in Fig. 3 gezeigte obere Totpunkt-Stellung. Für eine Bewegung aus der oberen Totpunkt-Stellung gemäß Fig. 3 und die untere Totpunkt-Stellung gemäß Fig. 4 benötigt die Nadelbarre 66 beispielsweise 60 ms.

Erreicht die Nadelbarre 66 die obere Totpunkt-Stellung gemäß Fig. 3, so wird die Lichtquelle 48 eingeschaltet, woraufhin diese parallel gerichtete Infrarotstrahlung 50 quer zur Bewegungsrichtung 12 auf den Bereich der Kamerasichtlinie 72 aussendet. Dies ist möglich, da sich die Nadelbarre 66 in ihrer oberen Totpunkt-Stellung befindet und das Sichtfeld von der Lichtquelle 48 zu der Kamerarichtlinie 72 freigibt. Sodann treten die in Fig. 2 gezeigten und mit Bezug darauf geschilderten Effekte unterschiedlicher Reflektionen im Verformungsbereich 46 auf. Dies bedeutet, dass der schraffiert gezeichnete "dunkle" Flächenabschnitt 60 das eingestrahlte Licht 50 weniger stark reflektiert als der unschraffiert gezeichnete Flächenabschnitt 58, so dass der Flächenabschnitt 60 dunkler erscheint als der Flächenabschnitt 58.

Es ist darauf hinzuweisen, dass die Aktivierung der Lichtquelle 48 und die zeitgleiche Aktivierung der Kamera 52 synchronisiert zu dem Arbeitstakt der Nadelbarre 66 erfolgt, so dass beispielsweise dann, wenn sich die Nadelbarre 66 in ihrer oberen Totpunkt-Stellung gemäß Fig. 3 befindet, jeweils drei Erfassungszyklen durchlaufen werden, was beispielsweise 30 ms in Anspruch nimmt, und dass dann, wenn sich die Nadelbarre 66 in ihrer unteren Totpunkt-Stellung gemäß Fig. 4 befindet, was ebenfalls beispielsweise 30 ms in Anspruch nimmt, keinerlei Erfassungszyklen durchlaufen werden und die Lichtquelle 48 inaktiv bleibt.

Die nicht gezeigte Kamera erfasst die Intensitätsunterschiede und leitet entsprechende Signale an eine Auswerteeinheit weiter. Die Auswerteeinheit empfängt die Signale der Kamera und wertet diese aus.

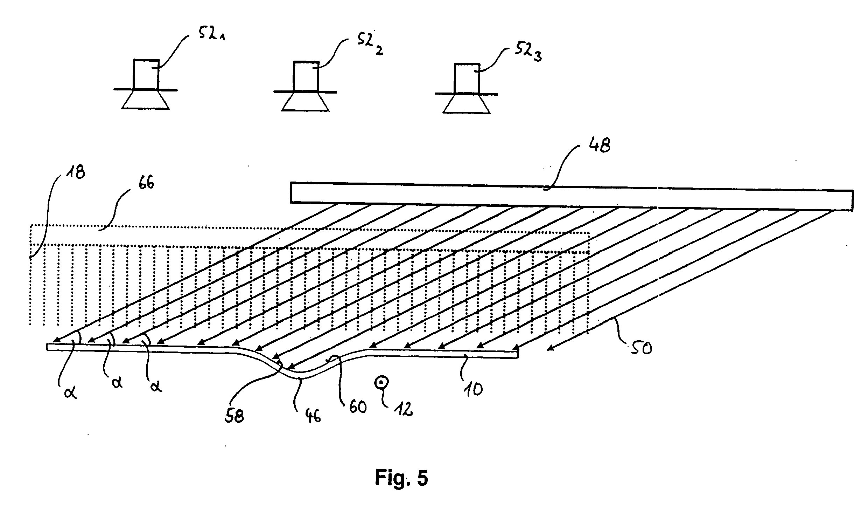

Fig. 5 zeigt eine Ansicht entlang der Schnittlinie V-V aus Fig. 3. Die Förderrichtung 12 der Tufting-Ware ist aus der Zeichenebene heraus gerichtet. Aus Fig. 5 wird ersichtlich, dass die Lichtstrahlen 50 quer zur Förderrichtung 12 eingestrahlt werden und in einem Winkel α auf die Tufting-Ware 10 treffen. Daraus ergeben sich die Kontrastunterschiede der Flächenabschnitte 58 und 60 der Delle 46, welche quer zur Förderrichtung 12 und damit mit hoher Zuverlässigkeit erfassbar sind. Es sind drei Zeilenkameras 52₁, 52₂ und 52₃ vorgesehen, die die gesamte Breite der Tufting-Ware 10 entlang der Kamerasichtlinie 72 überwachen. Der Vollständigkeit halber ist in Fig. 5 auch die Nadelbarre 66 mit den Nadeln 18 punktiert gezeigt, die hinter der Zeichenebene liegt.

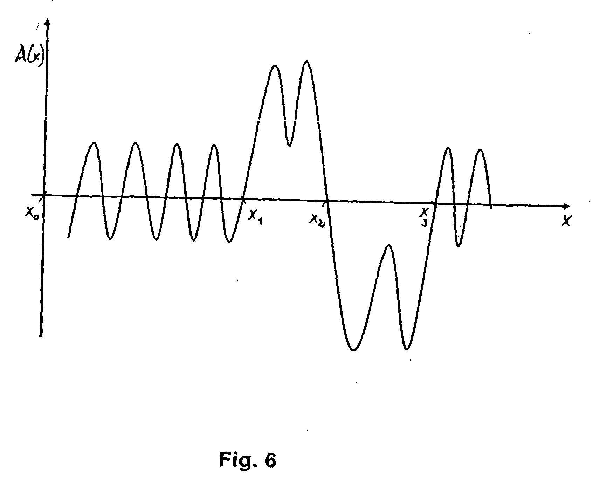

Ein beispielhafter Signalverlauf für eine Abtastung entlang der Kamerasichtlinie 72 ist in Fig. 6 gezeigt. Dort ist gezeigt, dass zwischen den Orten x₀ und x₁ die Kamera Intensitätsunterschiede erfasst, die durch die auf der Rückseite 44 der Tufting-Ware 10 vorhandenen Noppen 42 sowie durch die Struktur des Trägermaterials 14 bei Bestrahlung mit dem Infrarotlicht 14 auftreten. Zwischen den Orten x₁ und x₂ erfasst die Kamera einen Flächenabschnitt, in welchem das reflektierte Licht höhere Intensität aufweist. Dies ist beispielsweise der Flächenabschnitt 58. Zwischen den Orten x₂ und x₃ erfasst die Kamera hingegen einen Flächenabschnitt, in welchem die Intensität des reflektierten Lichts stark reduziert ist. Dieser Flächenbereich entspricht dem in Fig. 2 mit 60 bezeichneten Flächenabschnitt. Schließlich erfasst die Kamera nach dem Ort x₃ wieder die "normale" Rückseitenstruktur, bei welcher lediglich die Noppen 42 und die Struktur des Trägermaterials 14 das Signal bilden.

Die nicht gezeigte Auswerteeinheit umfasst schließlich verschiedene Filter, die es ermöglichen, die sich aus der "normalen" Flächenstruktur der Rückseite 44 der Tufting-Ware 10 ergebenden Signale sowie eventuell jeweils auch die Signalverläufe anderer Fehlertypen herauszufiltern oder zu schwächen und lediglich die sich aufgrund der Intensitätsunterschiede des in einem Verformungsbereich 46 reflektierten Lichts ergebenden Signale zu erfassen.

Mit der Erfindung wird eine Überwachungsvorrichtung, ein Verfahren zur Überwachung der Herstellung von Tufting-Ware sowie eine Tufting-Maschine bereitgestellt, mit welchen Fehlerstellen, die aufgrund von unzureichend funktionierenden Messern bei der Herstellung von Tufting-Ware entstehen, schnell und zuverlässig bei ihrer Entstehung erfasst werden können und entsprechende Maßnahmen an der Tufting-Maschine vorgenommen werden können, bevor längere Materialabschnitte von Tufting-Ware minderer Qualität erzeugt werden.

## Patentansprüche

1. Tufting-Maschine zum Herstellen von Tufting-Ware (10), insbesondere von Veloursteppich-Ware, mit einer Nadelbarre (66) zum Einnadeln von Polmaterial (16) in ein Trägermaterial (14) der Tufting-Ware (10), wenigstens einem Greifer (34) zum Festhalten von Polmaterial-Schlingen (22-30) und wenigstens einem Messer (36) zum Aufschneiden der Polmaterial-Schlingen (22-30) an der Vorderseite (38) der Tufting-Ware (10),
wobei die Tufting-Maschine ferner eine Vorrichtung zum Erfassen von Fehlerstellen (46) während der Herstellung der Tufting-Ware (10) aufweist, mit einer Lichtquelle (48) zum Einstrahlen von Licht (50) auf die Tufting-Ware (10) und mit einer optischen Erfassungseinrichtung (52) zum Erfassen des von der Tufting-Ware (10) ausgehenden Lichts,
wobei die Lichtquelle (48) die Rückseite (44) der Tufting-Ware (10) mit schräg einfallendem Licht (50) in einem Bestrahlungsbereich (B) bestrahlt, in dem wenigstens ein Greifer (34) zum Festhalten von Polmaterial-Schlingen (22, 24, 26, 28, 30) und wenigstens ein Messer (36) zum Aufschneiden der Polmaterial-Schlingen (22-30) an der Vorderseite (38) der Tufting-Ware (10) angreifen, und wobei die optische Erfassungseinrichtung (52) Intensitäten des von der Rückseite (44) der Tufting-Ware (10) innerhalb des Bestrahlungsbereichs (B) reflektierten Lichts erfasst und anhand der erfassten Lichtintensitäten durch Fehlerstellen bedingte Unebenheiten (46) der Rückseite (44) der Tufting-Ware (10) ermittelt.

2. Tufting-Maschine nach Anspruch 1,
**dadurch gekennzeichnet, dass** das von der Lichtquelle (48) ausgehende Licht (50), vorzugsweise durch ein optisches System, insbesondere durch ein Linsensystem, parallel gerichtet ist.

3. Tufting-Maschine nach Anspruch 1 oder 2,
**dadurch gekennzeichnet, dass** das Licht (50) im Infrarot-Bereich, insbesondere mit einer Wellenlänge von 10⁻³m bis 7,8·10⁻⁷m liegt.

4. Tufting-Maschine nach Anspruch 3,
**dadurch gekennzeichnet, dass** die Lichtquelle (48) eine Vielzahl von Infrarot-Leuchtdioden aufweist, die insbesondere auf einer Linie oder/und gleich orientiert angeordnet sind.

5. Tufting-Maschine nach einem der vorangehenden Ansprüche,
**dadurch gekennzeichnet, dass** die Tufting-Ware (10) sich während der Erfassung der Fehlerstellen in einer Förderrichtung (12) bewegt und dass die Bestrahlungsrichtung des einfallenden Lichts (50) im wesentlichen parallel oder vorzugsweise im wesentlichen quer zur Förderrichtung (12) verläuft.

6. Tufting-Maschine nach einem der vorangehenden Ansprüche,
**dadurch gekennzeichnet, dass** das von der Lichtquelle (48) ausgehende Licht mit der Rückseite (44) der Tufting-Ware (10) einen spitzen Winkel (α), vorzugsweise im Bereich von 10° bis 80°, insbesondere im Bereich von 30° bis 60°, einschließt.

7. Tufting-Maschine nach einem der vorangehenden Ansprüche,
**dadurch gekennzeichnet, dass** die Erfassungseinrichtung eine Kamera (52), insbesondere eine Zeilenkamera, umfasst.

8. Tufting-Maschine nach einem der vorangehenden Ansprüche,
**dadurch gekennzeichnet, dass** die Erfassungseinrichtung ein elektronisches Signalfilter, insbesondere ein Digitalfilter, umfasst.

9. Tufting-Maschine nach Anspruch 8,
**dadurch gekennzeichnet, dass** das Filter als FIR-Filter, insbesondere als FIR-Bandpaßfilter, ausgebildet ist.

10. Tufting-Maschine nach einem Anspruch 8 oder 9,
**dadurch gekennzeichnet, dass** das Filter zur Unterdrückung von regulären Helligkeitssignalen ausgebildet ist, die von der Struktur eines Trägermaterials (14) der Tufting-Ware (10), der Lage von Noppen (42) auf der Rückseite (44) der Tufting-Ware (10) oder dergleichen herrühren.

11. Tufting-Maschine nach einem der Ansprüche 8 bis 10,
**gekennzeichnet durch** wenigstens ein weiteres Filter zum Erkennen von Fadenbruch-Fehlerstellen oder/und Doppelfaden-Fehlerstellen, wobei die einzelnen Filter und/oder diesen zugeordnete Erkennungsschwellen zur Erkennung von Fehlerstellen, vorzugsweise zur unabhängigen Erkennung unterschiedlicher Fehlerstellen-Typen, ausgebildet sind.

12. Tufting-Maschine nach einem der vorangehenden Ansprüche,
**dadurch gekennzeichnet, dass** die Lichtquelle (48) und/oder die Erfassungseinrichtung (52) zu dem Arbeitstakt einer Nadelbarre (66) zum Einnadeln des Polmaterials (16) in ein Trägermaterial (14) der Tufting-Ware (10) synchronisiert sind.

13. Tufting-Maschine nach Anspruch 12,
**dadurch gekennzeichnet, dass** die Lichtquelle (48) und die Erfassungseinrichtung (52) wenigstens einen, beispielsweise drei, Erfassungszyklen je Arbeitstakt durchlaufen und zeitlich auftretende Einschränkungen eines Sichtfelds der Erfassungseinrichtung (52) zeitlich ausblenden.

14. Verfahren zum Überwachen der Herstellung von Tufting-Ware (10) und zum Erfassen von Fehlerstellen, umfassend die Schritte:
Einstrahlen von Licht (50) auf die Tufting-Ware (10) und
Erfassen des von der Tufting-Ware (10) ausgehenden Lichts,
wobei die Rückseite der Tufting-Ware (10) in einem Bestrahlungsbereich (B) schräg mit Licht (50) bestrahlt wird, wobei in dem Bestrahlungsbereich (B) wenigstens ein Greifer (34) zum Festhalten von Polmaterial-Schlingen (22-30) und wenigstens ein Messer (36) zum Aufschneiden der Polmaterial-Schlingen (22-30) an der Vorderseite (38) der Tufting-Ware (10) angreifen, und wobei Intensitäten des von der Rückseite (44) der Tufting-Ware (10) innerhalb des Bestrahlungsbereichs (B) reflektierten Lichts erfasst und anhand der erfassten Lichtintensitäten durch Fehlerstellen bedingte Unebenheiten (46) der Rückseite (44) der Tufting-Ware (10) ermittelt werden.

15. Verfahren nach Anspruch 14,
**dadurch gekennzeichnet, dass** das von der Lichtquelle (48) ausgehende Licht parallel gerichtet wird.

16. Verfahren nach Anspruch 14 oder 15,
**dadurch gekennzeichnet, dass** das von der Lichtquelle (48) ausgehende Licht mit der Rückseite (44) der Tufting-Ware (10) einen spitzen Winkel (α), vorzugsweise im Bereich von 10° bis 80°, insbesondere im Bereich von 30° bis 60°, einschließt.

17. Verfahren nach einem der Ansprüche 14 bis 16,
**dadurch gekennzeichnet, dass** beim Ermitteln der Fehlerstellen reguläre Helligkeitssignale, die von der Struktur eines Trägermaterials (14) der Tufting-Ware (10), der Lage von Noppen (42) der Tufting-Ware (10) oder dergleichen herrühren, ausgefiltert werden.

18. Verfahren nach einem der Ansprüche 14 bis 17,
**dadurch gekennzeichnet, dass** die Lichtquelle (48) und die Erfassungseinrichtung (52) zu dem Arbeitstakt einer Nadelbarre (66) zum Einnadeln des Polmaterials (16) in ein Trägermaterial (14) der Tufting-Ware (10) synchronisiert wird.

19. Verfahren nach Anspruch 18,
**dadurch gekennzeichnet, dass** die Lichtquelle (48) und die Erfassungseinrichtung (52) wenigstens einen, beispielsweise drei, Erfassungszyklen je Arbeitstakt durchlaufen und zeitlich auftretende Einschränkungen eines Sichtfelds der Erfassungseinrichtung (52) zeitlich ausblenden.

## Claims

1. A tufting machine for the manufacture of tufting fabrics (10), in particular of cut-pile carpet material, with a needle bar (66) for needle punching of pile material (16) into a carrier material (14) of the tufting fabrics (10), at least one gripper (34) for securely holding the pile material loops (22 to 30) and at least one knife (36) for cutting the pile material loops (22 to 30) at the front side of the tufting fabrics (10), with the tufting machine further comprising an apparatus for the detection of flaws (46) during the manufacture of the tufting fabrics (10), with a light source (48) for radiating light (50) onto the tufting fabrics (10), and with an optical detection means (52) for the detection of the light which is reflected by the tufting fabrics (10), wherein the light source (48) radiates light (50) which is incident under an angle onto the backside (44) of the tufting fabrics (10) within a radiation area (B), in which at least one gripper (34) for holding the pile material loops (22, 24, 26, 28, 30) and at least one knife (36) for cutting the pile material loops (22 to 30) come into engagement at the front side (38) of the tufting fabrics (10), and wherein the optical detection means (52) detects the intensities of the light which is reflected from the backside (44) of the tufting fabrics (10) within the radiation area (B) and determines regions of unevenness (46) of the backside (44) of the tufting fabrics (10), which are caused by flaws.

2. The tufting machine according to Claim 1,
**characterised in that** the light (50) which is emitted from the light source (48) is directed parallel, preferably by an optical system, in particular a lens system.

3. The tufting machine according to Claim 1 or 2,
**characterised in that** the light (50) is in the infrared range, in particular with a wave length of 10⁻³ m to 7.8 · 10⁻⁷ m.

4. The tufting machine according to Claim 3,
**characterised in that** the light source (48) comprises a plurality of infrared light emitting diodes which are arranged, in particular along a line or/and oriented in the same way.

5. The tufting machine according to one of the previous claims,
**characterised in that** the tufting fabrics (10) move in the feed direction (12) during the detection of the flaws, and that the radiation direction of the incident light (50) is essentially parallel or preferably transverse to the feed direction (12).

6. The tufting machine according to one of the previous claims,
**characterised in that** the light which is emitted from the light source (48) includes an acute angle (α), preferably ranging from 10° to 80°, in particular from 30° to 60°, with the backside (44) of the tufting fabrics (10).

7. The tufting machine according to one of the previous claims,
**characterised in that** the detection means comprises a camera (52), in particular a line camera.

8. The tufting machine according to one of the previous claims,
**characterised in that** the detection means comprises an electronic signal filter, in particular, a digital filter.

9. The tufting machine according to Claim 8,
**characterised in that** the filter is formed as an FIR filter, in particular, an FIR bandpass filter.

10. The tufting machine according to Claim 8 or 9,
**characterised in that** the filter is adapted to suppress regular brightness signals which are originated by the structure of a carrier material (14) of the tufting fabrics (10), the position of knops (42) on the backside (44) of the tufting fabrics (10), or the like.

11. The tufting machine according to one of Claims 8 to 10,
**characterised by** at least one additional filter for the detection of thread breakage flaws or/and double thread defects, with the individual filters and/or the associated detection thresholds being adapted for the detection of flaws, preferably for the independent detection of different flaw types.

12. The tufting machine according to one of the previous claims,
**characterised in that** the light source (48) and/or the detection means (52) is/are synchronised with the duty cycle of a needle bar (66) for needle punching of the pile material (16) into a carrier material (14) of the tufting fabrics (10).

13. The tufting machine according to Claim 12,
**characterised in that** the light source (48) and the detection means (52) perform at least one, e. g. three, detection cycles per duty cycle and temporally suppress temporal restrictions of a visual field of the detection means (52).

14. A method for monitoring the manufacture of tufting fabrics (10) and the detection of flaws, comprising the steps of:
radiating light (50) onto the tufting fabrics (10); and
detecting the light which is reflected by the tufting fabrics (10),
with the backside (44) of the tufting fabrics (10) being radiated with light (50) which is incident under an angle within a radiation area (B), with at least one gripper (34) for holding the pile material loops (22 to 30) and at least one knife (36) for cutting the pile material loops (22 to 30) coming into engagement at the front side (38) of the tufting fabrics (10) within the radiation area (B), and with the intensities of the light which is reflected from the backside (44) of the tufting fabrics (10) within the radiation area (B) being detected and regions of unevenness (46) which are caused by flaws at the backside (44) of the tufting fabrics (10) being determined.

15. The method according to Claim 14,
**characterised in that** the light emitted from the light source (48) is directed parallel.

16. The method according to Claim 14 to 15,
**characterised in that** the light which is emitted from the light source (48) includes an acute angle (α), preferably ranging from 10° to 80°, in particular from 30° to 60°, with the backside (44) of the tufting fabrics (10).

17. The method according to one of Claims 14 to 17,
**characterised in that** regular brightness signals which are originated by the structure of a carrier material (14) of the tufting fabrics (10), the position of knops (42) of the tufting fabrics (10), or the like, are filtered out.

18. The method according to one of Claims 14 to 17,
**characterised in that** the light source (48) and the detection means (52) are synchronised with the duty cycle of a needle bar (66) for needle punching of the pile material (16) into a carrier material (14) of the tufting fabrics (10).

19. The method according to Claim to 18,
**characterised in that** the light source (48) and the detection means (52) perform at least one, e. g. three, detection cycles per duty cycle and temporally suppress temporal restrictions of a visual field of the detection means (52).

## Revendications

1. Machine à tufter pour la fabrication de tissu tufté (10), plus particulièrement de tissu de moquette velours, comprenant une barre à aiguilles (66) destinée à introduire la matière à poil (16) dans une matière de support (14) du tissu tufté (10), au moins un préhenseur (34) destiné à retenir les boucles de matière à poil (22 à 30) et au moins un couteau (36) destiné à ouvrir lesdites boucles de matière à poil (22 à 30) sur l'endroit (38) du tissu tufté (10),
la machine à tufter présentant en outre un dispositif pour détecter des défauts (46) dans le tissu tufté (10) en cours de fabrication, lequel dispositif comprend une source lumineuse (48) destinée à projeter des rayons de lumière (50) sur le tissu tufté (10) et un dispositif de détection optique (52) prévu pour détecter la lumière (50) émanant du tissu tufté (10),
la source lumineuse (48) éclairant l'envers (44) du tissu tufté (10) avec une lumière à incidence oblique à l'intérieur d'une zone d'éclairage (B), dans laquelle s'activent au moins un préhenseur (34) destiné à retenir les boucles de matière à poil (22, 24, 26, 28, 30) et au moins un couteau (36) destiné à ouvrir les boucles de matière à poil (22 à 30) sur l'endroit (38) du tissu tufté (10),
et le dispositif de détection optique (52) détectant des intensités de la lumière réfléchie par l'envers (44) du tissu tufté (10) à l'intérieur de la zone d'éclairage (B), et déterminant, sur la base des intensités de lumière détectées, des inégalités dues à des défauts (46) dans l'envers (44) du tissu tufté (10).

2. Machine à tufter selon la revendication 1,
**caractérisée en ce que** la lumière (50) émanant de la source lumineuse (48) est dirigée parallèlement, de préférence par un système optique, et plus particulièrement par un système de lentilles optiques.

3. Machine à tufter selon la revendication 1 ou 2,
**caractérisée en ce que** la lumière (50) est située dans le domaine de l'infrarouge, plus particulièrement avec une longueur d'onde de 10⁻³ m à 7,8˙10⁻⁷ m.

4. Machine à tufter selon la revendication 3,
**caractérisée en ce que** la source lumineuse (48) présente un grand nombre de diodes électroluminescentes à rayonnement infrarouge, lesquelles sont plus particulièrement disposées sur une ligne ou/et selon une même orientation.

5. Machine à tufter selon l'une des revendications précédentes,
**caractérisée en ce que,** pendant la détection des défauts, le tissu tufté (10) se déplace dans un sens de progression (12) et que la direction de rayonnement de la lumière (50) incidente est sensiblement parallèle ou de préférence sensiblement perpendiculaire au sens de progression (12).

6. Machine à tufter selon l'une des revendications précédentes,
**caractérisée en ce que** la lumière émanant de la source lumineuse (48) forme avec l'envers (44) du tissu tufté (10) un angle aigu (α), de préférence compris entre 10° et 80°, et plus particulièrement entre 30° et 60°.

7. Machine à tufter selon l'une des revendications précédentes,
**caractérisée en ce que** le dispositif de détection comporte une caméra (52), plus particulièrement une caméra à balayage de ligne.

8. Machine à tufter selon l'une des revendications précédentes,
**caractérisée en ce que** le dispositif de détection comporte un filtre de signal électronique, plus particulièrement un filtre numérique.

9. Machine à tufter selon la revendication 8,
**caractérisée en ce que** le filtre est conçu comme un filtre RIF, plus particulièrement comme un filtre passe bande RIF.

10. Machine à tufter selon la revendication 8 ou 9,
**caractérisée en ce que** le filtre est conçu pour supprimer les signaux de luminosité réguliers qui proviennent de la structure d'une matière de support (14) du tissu tufté (10), de la position des nopes (42) sur l'envers (44) du tissu tufté (10) ou similaires.

11. Machine à tufter selon l'une des revendications 8 à 10,
**caractérisée par** au moins un autre filtre servant à reconnaître des défauts dus à une rupture de fil ou/et à la présence d'un fil double, les différents filtres et/ou les seuils de reconnaissance associés à ces derniers étant conçus pour reconnaître des défauts, de préférence pour reconnaître de manière indépendante différents types de défaut.

12. Machine à tufter selon l'une des revendications précédentes,
**caractérisée en ce que** la source lumineuse (48) et/ou le dispositif de détection (52) sont synchronisés avec le cycle de travail d'une barre à aiguilles (66) destinée à introduire la matière à poil (16) dans une matière de support (14) du tissu tufté (10).

13. Machine à tufter selon la revendication 12,
**caractérisée en ce que** la source lumineuse (48) et le dispositif de détection (52) parcourent au moins un, par exemple trois, cycles de détection par cycle de travail et suppriment temporairement des limitations d'un champ visuel du dispositif de détection (52) qui surviennent temporairement.

14. Procédé pour surveiller la fabrication de tissu tufté (10) et pour détecter des défauts dans un tissu tufté, comprenant les étapes suivantes :
projection de lumière (50) sur le tissu tufté (10) et
détection de la lumière émanant du tissu tufté (10),
l'envers (44) du tissu tufté (10) étant éclairé avec une lumière (50) à incidence oblique à l'intérieur d'une zone d'éclairage (B), au moins un préhenseur (34) destiné à retenir les boucles de matière à poil (22 à 30) et au moins un couteau (36) destiné à ouvrir les boucles de matière à poil (22 à 30) sur l'endroit (38) du tissu tufté (10) étant en action, et des intensités de la lumière réfléchie par l'envers (44) du tissu tufté (10) à l'intérieur de la zone d'éclairage (B) étant détectées et des inégalités dues à des défauts (46) dans l'envers (44) du tissu tufté (10) étant déterminées sur la base des intensités de lumière détectées.

15. Procédé selon la revendication 14,
**caractérisée en ce que** la lumière (50) émanant de la source lumineuse (48) est dirigée parallèlement.

16. Procédé selon la revendication 14 ou 15,
**caractérisé en ce que** la lumière émanant de la source lumineuse (48) forme avec l'envers (44) du tissu tufté (10) un angle aigu (α), de préférence compris entre 10° et 80°, et plus particulièrement entre 30° et 60°.

17. Procédé selon l'une des revendications 14 à 16,
**caractérisé en ce que,** pendant la détermination des défauts, les signaux de luminosité réguliers provenant de la structure d'une matière de support (14) du tissu tufté (10), de la position des nopes (42) sur l'envers (44) du tissu tufté (10) ou similaires sont filtrés.

18. Procédé selon l'une des revendications 14 à 17,
**caractérisé en ce que** la source lumineuse (48) et le dispositif de détection (52) sont synchronisés avec le cycle de travail d'une barre à aiguilles (66) servant à introduire la matière à poil (16) dans une matière de support (14) du tissu tufté (10).

19. Procédé selon la revendication 18,
**caractérisé en ce que** la source lumineuse (48) et le dispositif de détection (52) parcourent au moins un, par exemple trois, cycles de détection par cycle de travail et suppriment temporairement des limitations d'un champ visuel du dispositif de détection (52) qui surviennent temporairement.
